# FASCICULE DE BREVET EUROPEEN

(11) **EP 0 575 264 B1**
(45) Date de publication et mention de la délivrance du brevet: **12.10.1994**
(21) Numéro de dépôt: 93420241.7
(22) Date de dépôt: 11.06.1993
(51) Int. Cl.: F24H 9/20, A47J 31/54

(54) **Dispositif de chauffage d'un liquide pourvu d'un organe de régulation thermique d'ambiance**
Wassererhitzer mit einem Lufttemperatursteuergerät
Liquid heater having an air temperature control device

(30) Priorité: 12.06.1992 FR 9207384
(43) Date de publication de la demande: 22.12.1993
(73) Titulaire: SEB S.A., F-21261 Selongey Cédex (FR)
(72) Inventeur: Delhom, Daniel Henri Denis, F-65110 Cauterets (FR)

(56) Documents cités:
- DE-A- 4 023 921
- DE-U- 9 003 794

## Description

La présente invention se rapporte au domaine technique général des dispositifs de chauffage d'un liquide ou fluide circulant dans une conduite en vue de réaliser la préparation d'une boisson chaude.

La présente invention concerne un dispositif de chauffage de liquide ou fluide, destiné à équiper un appareil de préparation d'une boisson chaude comportant un corps tubulaire de passage du liquide ou fluide, une résistance électrique de chauffage du corps tubulaire, et un organe de régulation thermique de la résistance électrique.

Le dispositif de chauffage conforme à l'invention est plus particulièrement destiné à équiper une machine de préparation d'un café-boisson, mais il est bien évident que l'invention n'est nullement limitée à ce type d'appareils, et que le dispositif de chauffage peut être intégré dans tous types d'appareils de préparation d'une boisson chaude, tels que des machines à préparer le thé par exemple.

Dans les appareils de préparation de café-boisson, les dispositifs de chauffage du liquide sont classiquement montés dans la partie inférieure de l'appareil dans une enceinte, généralement fermée, dont la partie supérieure est formée d'une plaque conductrice de chaleur destinée à recevoir et supporter la verseuse. De tels dispositifs de chauffe comportent, tel que cela est par exemple décrit dans le modèle d'utilité allemand DE-U-7813660, un corps tubulaire de passage du liquide, une résistance électrique de chauffage du corps tubulaire et un organe de régulation thermique de la résistance électrique, en l'occurence un thermostat. Le corps tubulaire et la résistance électrique de chauffage présentent une forme caractéristique en U ou en fer à cheval, la résistance électrique étant soudée contre le corps tubulaire et étant entourée par ce dernier. Le thermostat est soit directement fixé sur une plaque support solidaire de la résistance électrique, ou comme cela est montré dans le document DE-U-7813660, sur un collier métallique conducteur de la chaleur, lui-même solidaire de la résistance électrique et du corps tubulaire. Dans ce type de montage bien connu dans l'art antérieur, le thermostat est donc un thermostat de contact dont le déclenchement est essentiellement assuré par l'énergie thermique qui lui est transmise par conduction à partir de la résistance. Dans ces applications, le thermostat a pour fonction essentielle de maintenir la température de la résistance chauffante en-deçà d'une température de consigne.

Un tel type de montage peut être considéré comme assurant de manière acceptable la fonction de régulation pour laquelle il est conçu. Il s'avère toutefois, qu'en raison de la part prépondérante prise par la conduction thermique dans le déclenchement du thermostat, la précision de la régulation est souvent insuffisante. Par ailleurs, le recours à ce type d'agencement du thermostat nécessite une opération de montage longue et par là-même coûteuse, puisqu'en général il est nécessaire d'avoir recours à une série de pièces intermédiaires qui doivent être individuellement posées et/ou fixées. Au total, l'opération de montage représente en elle-même une opération présentant une certaine complexité.

La présente invention vise en conséquence à remédier aux différents inconvénients énumérés ci-dessus et à proposer un dispositif de chauffage dont la régulation thermique est améliorée et dont l'agencement est simplifié.

L'objet de l'invention vise également à fournir un appareil de préparation d'une boisson chaude, tel qu'une machine à café équipée d'un dispositif de chauffage conforme à l'invention.

Les objets assignés à l'invention sont atteints à l'aide d'un dispositif de chauffage d'un liquide destiné à équiper un appareil de préparation d'une boisson chaude comportant un corps tubulaire de passage du liquide, une résistance électrique de chauffage dudit corps et un organe de régulation thermique de ladite résistance caractérisé en ce que l'organe de régulation thermique est relié électriquement à une zone froide de la résistance par des moyens de liaison qui assurent également le maintien en suspension dudit organe de régulation à distance de la résistance et du corps tubulaire pour constituer un organe de régulation thermique d'ambiance.

D'autres particularités et avantages de l'invention apparaîtront et ressortiront plus en détail à la lecture de la description faite ci-après, en référence aux dessins annexés, donnés à titre d'exemples illustratifs non limitatifs dans lesquels :
- la figure 1 représente selon une vue de dessus, un dispositif de chauffage conforme à l'invention.
- la figure 2 représente selon une vue en coupe transversale longitudinale partielle, un détail de l'agencement d'un organe de régulation thermique dans un dispositif de chauffage conforme à l'invention.
- la figure 3 représente selon une vue de dessus une variante de réalisation d'un dispositif de chauffage conforme à l'invention.
- la figure 4 représente, selon une coupe transversale, un détail de réalisation d'une machine à café conforme à l'invention.

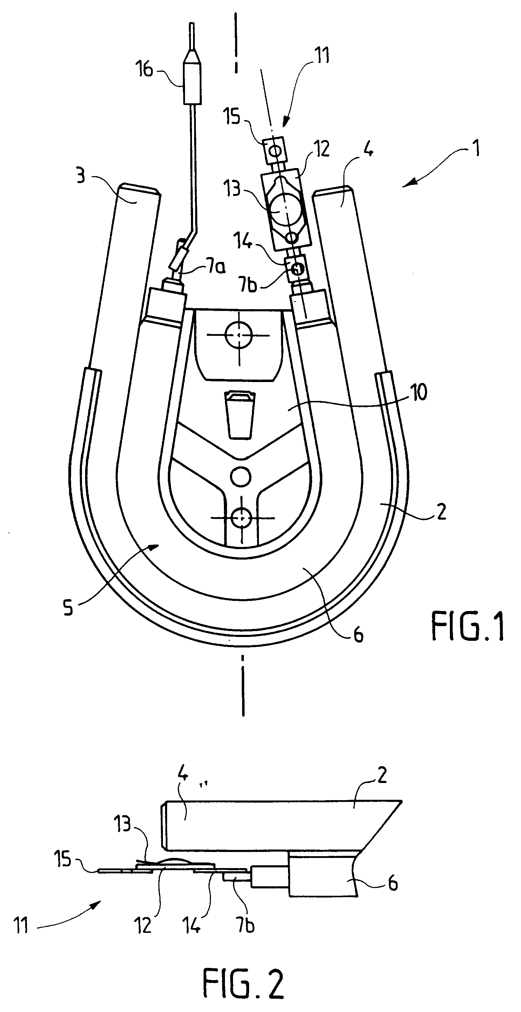

La figure 1 montre un dispositif de chauffage 1 d'un fluide, destiné à équiper un appareil de préparation d'une boisson chaude. Dans l'exemple représenté, le dispositif de chauffage 1 est destiné à être monté dans une machine à café pour assurer le chauffage de l'eau servant à la préparation de la boisson chaude. A cette fin, le dispositif de chauffage 1 comporte un corps tubulaire 2 de forme caractéristique sensiblement en U ou en fer à cheval. Le corps tubulaire 2 réalisé par exemple en un matériau métallique bon conducteur de la chaleur, est pourvu d'une entrée 3 à partir de laquelle s'écoule le liquide à chauffer, en direction d'une sortie 4. L'eau provient d'un réservoir non représenté aux figures et est dirigée en aval de la sortie 4, en considérant le sens de progression du liquide, vers les organes de transfert (non représentés) en direction de la mouture.

Le dispositif de chauffage 1 comporte une résistance électrique de chauffage 5 de forme identique à celle du corps tubulaire 2, mais de dimensions inférieures de manière à pouvoir être montée et fixée contre et le long dudit corps 2 dans la surface interne qu'il délimite entre ses branches. La résistance électrique de chauffage 5 est, de manière classique, constituée par une résistance blindée montée en relation thermique, par exemple par soudage, contre le corps tubulaire 2, ce dernier entourant ladite résistance 5. De manière connue en soi, la résistance électrique de chauffage 5 est pourvue d'une zone chauffante 6 formant le corps principal de ladite résistance, se prolongeant vers ses extrémités, par des brins terminaux 7a, 7b formant chacun les zones froides de ladite résistance. La longueur de la résistance électrique de chauffage 5 est avantageusement sensiblement inférieure à la longueur du corps tubulaire 2, les brins terminaux 7a, 7b, s'étendant sensiblement au voisinage et en regard respectivement des entrée 3 et sortie 4 du corps tubulaire 2.

Avantageusement l'ensemble de la résistance électrique 5 et du corps tubulaire 2 est maintenu en place par soudage sur une plaque support 10 destinée à être fixée dans l'appareil de préparation de la boisson chaude.

Le dispositif de chauffage 1 conforme à l'invention comprend également un organe de régulation thermique 11, relié électriquement à la résistance électrique de chauffage 5. De préférence, l'organe de régulation thermique 11 est constitué par un thermostat comprenant un corps central 12, une bilame 13 et deux cosses de connection 14,15 formant les bornes du thermostat. Dans l'exemple de réalisation montré aux figures 1 et 2, le thermostat 11 est relié électriquement au brin terminal froid 7b par la borne 14 qui constitue ainsi un moyen de liaison assurant également le maintien en suspension du thermostat à distance de la résistance de chauffage électrique 5 et du corps tubulaire 2. La liaison peut être assurée de manière simple par soudage de la borne 14 sur le brin froid 7b. Dans un tel montage, le thermostat s'étend sensiblement parallèlement, au voisinage, et en regard de la sortie 4 du corps tubulaire 2 et n'est soumis principalement qu'à l'influence thermique résultant des flux de convection dans la zone où il est maintenu en place. Il se comporte ainsi comme un organe de régulation thermique d'ambiance s'affranchissant dans une large mesure des phénomènes parasites de conduction thermique.

Tel que cela est montré à la figure 1, le brin terminal 7a peut être relié à un fusible de sécurité 16.

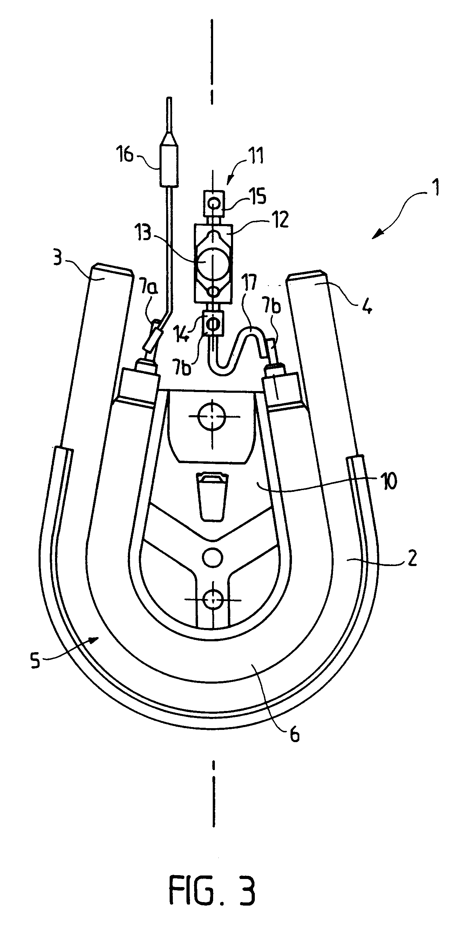

La variante de réalisation montrée à la figure 3 ne diffère de celle montrée à la figure 1 que par le montage de l'organe de régulation thermique 11 sur le brin terminal froid 7b, par l'intermédiaire d'un moyen de liaison constitué par une pièce intermédiaire 17. Cette dernière peut être constituée par tous types de pièces présentant une rigidité suffisante pour assurer le maintien en suspension de l'organe de régulation thermique 11. Dans la variante montrée à la figure 3, les moyens de liaison sont constitués par un fil conducteur soudé sur le brin terminal 7b, dont la longueur et la conformation est telle que le thermostat occupe une position dans laquelle il s'étend sensiblement dans la zone centrale du U, en regard et à distance de l'entrée 3 et de la sortie 4 du corps tubulaire 2.

D'autres moyens de liaison sont bien évidemment envisageables sans sortir du cadre de l'invention, et ils peuvent être constitués par exemple de barres ou lamelles.

Grâce aux montages décrits, il est ainsi possible d'intégrer le dispositif de chauffage conforme à l'invention dans un appareil de préparation d'une boisson chaude, tel qu'une machine à café. En particulier, l'organe de régulation thermique d'ambiance peut être disposé dans l'enceinte inférieure de la machine dont la partie supérieure forme la plaque de chauffe et de support de la verseuse de la machine à café.

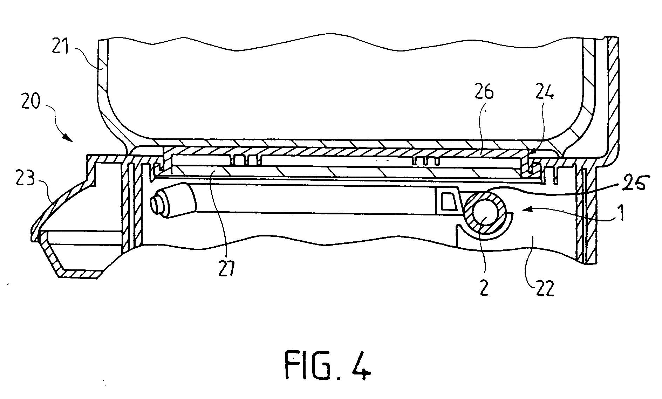

La figure 4 illustre un agencement particulier du support 20 d'une verseuse 21 de machine à café. Le recours à un thermostat d'ambiance monté selon l'invention réduit l'encombrement du dispositif de chauffage 1 qui peut en conséquence être fixé dans l'enceinte 22 délimitée par les parois 23 du support 20, à distance de la paroi supérieure 24 de l'enceinte 22.
En raison de la réduction des contraintes thermiques subies à ce niveau et du gain de place, il est ainsi possible de réaliser la paroi supérieure 24 sous la forme d'une plaque 26 en matériau plastique destinée à supporter la verseuse 21. On réalise ainsi un appareil avec lequel les risques de brûlures sont réduits. L'isolation thermique peut être améliorée en interposant une plaque d'isolation thermique 27 entre la plaque 26 et la face externe 25.

Le recours au type de montage décrit précécemment permet de s'affranchir dans la conception des appareils de préparation d'une boisson chaude, des contraintes de conception liées à la nécessité de maintenir le thermostat en contact avec un élément conducteur de chaleur. Il convient en outre de noter la simplification du montage obtenu, puisqu'il suffit de fixer le thermostat en position par une simple opération de soudage.

## Revendications

1. Dispositif de chauffage (1) d'un liquide destiné à équiper un appareil de préparation d'une boisson chaude comportant un corps tubulaire (2) de passage du liquide, une résistance électrique de chauffage (5) dudit corps (2) et un organe de régulation thermique (11) de ladite résistance caractérisé en ce que l'organe de régulation thermique (11) est relié électriquement à une zone froide (7b) de la résistance (5) par des moyens de liaison (14,17) qui assurent également le maintien en suspension dudit organe de régulation (11) à distance de la résistance (5) et du corps tubulaire (2) pour constituer un organe de régulation thermique d'ambiance.

2. Dispositif selon la revendication 1 caractérisé en ce que les moyens de liaison sont constitués par une borne (14) de l'organe de régulation thermique d'ambiance (11), de préférence soudée sur la zone froide (7b).

3. Dispositif selon la revendication 1 caractérisé en ce que les moyens de liaison sont constitués par une pièce intermédiaire (17), en particulier un fil conducteur, présentant une rigidité suffisante pour assurer le maintien de l'organe de régulation thermique d'ambiance (11).

4. Dispositif selon l'une des revendications précédentes caractérisé en ce que l'organe de régulation thermique d'ambiance (11) est un thermostat.

5. Dispositif selon l'une des revendications précédentes caractérisé en ce que :
- le corps tubulaire (2) et la résistance électrique (5) sont montés l'un contre l'autre et forment un U, le corps tubulaire (2) entourant la résistance (5) et se prolongeant par une entrée (3) et une sortie (4) au-delà des brins terminaux de la résistance, formant les zones froides (7a,7b) de la résistance (5).
- l'organe de régulation thermique (11) est monté sur l'un des brins (7b) d'extrémité de la résistance (5).

6. Dispositif selon les revendications 2 et 5 caractérisé en ce que l'organe de régulation thermique (11) est monté directement par l'une de ses bornes (14) sur l'un des brins froids (7b) et s'étend sensiblement parallèlement au voisinage et en regard de la sortie (4) du corps tubulaire (2).

7. Dispositif selon les revendications 3 et 5 caractérisé en ce que l'organe de régulation thermique (11) est monté sur l'un des brins froids (7b) par une pièce intermédiaire (17), et s'étend sensiblement dans la zone centrale du U en regard et à distance de la sortie (4) et de l'entrée (3) du corps tubulaire (2).

8. Appareil de préparation d'une boisson chaude comportant dans une enceinte (22) dont la partie supérieure forme une plaque de chauffe et de support d'une verseuse, un dispositif de chauffe conforme à l'une des revendications 1 à 7.

9. Appareil selon la revendication 8 caractérisé en ce qu'il est constitué par une machine à café.

10. Appareil selon les revendications 8 ou 9 caractérisé en ce qu'il comporte un support (20) de verseuse (21) pourvu d'une plaque (26) en matériau plastique sur laquelle est destinée à reposer ladite verseuse.

## Claims

1. A heater device (1) for heating a liquid and designed to be fitted to an appliance for preparing a hot beverage, the device comprising a tubular body (2) through which the liquid passes, an electrical heating resistance (5) for said body (2), and a temperature regulation member (11) for said resistance, the device being characterized in that the temperature regulation member (11) is electrically connected to a cold zone (7b) of the resistance (5) via connection means (14, 17) which also serve to hold said regulation member(11) in suspension at a distance from the resistance (5) and the tubular body (2) so as to constitute a member for regulating ambient temperature.

2. A device according to claim 1, characterized in that the connection means are constituted by a terminal (14) of the ambient temperature regulation member (11), which is preferably soldered to the cold zone (7b).

3. A device according to claim 1, characterized in that the connection means are constituted by an intermediate piece (17), in particular a conductor wire having sufficient rigidity to hold the ambient temperature regulation member (11).

4. A device according to any preceding claim, characterized in that the ambient temperature regulation member (11) is a thermostat.

5. A device according to any preceding claim, characterized in that:
the tubular body (2) and the electrical resistance (5) are mounted one against the other and form a U-shape, the tubular body (2) surrounding the resistance (5) and having an inlet (3) and an outlet (4) that extend beyond the terminal strands of the resistance, which strands form cold zones (7a, 7b) of the resistance (5); and
the temperature regulation member (11) is mounted on one of the end strands (7b) of the resistance (5).

6. A device according to claim 5 as dependent upon claim 2, characterized in that the temperature regulation member (11) is mounted directly via one of its terminals (14) on one of the cold strands (7b) and extends substantially parallel to, in the vicinity of and facing the side of the outlet (4) of the tubular body (2).

7. A device according to claim 5 as dependent upon claim 3, characterized in that the temperature regulation member (11) is mounted on one of the cold strands (7b) via an intermediate piece (17) and extends substantially in the middle of the U-shape at a distance from and facing the sides of the outlet (4) and the inlet (3) of the tubular body (2).

8. An appliance for preparing a hot beverage having an enclosure (22) whose top portion forms a plate for heating and supporting a pot, which enclosure contains a heater device according to any one of claims 1to 7.

9. An appliance according to claim 8, characterized in that it is constituted by a coffee machine.

10. An appliance according to claim 8 or 9, characterized in that it includes a support (20) for a pot (21), which support is provided with a plate (26) of plastics material on which said pot is designed to stand.

## Patentansprüche

1. Heizvorrichtung (1) zur Erhitzung einer Flüssigkeit für den Einbau in einen Heißgetränkeautomaten, bestehend aus einem rohrförmigen Körper (2), in dem die Flüssigkeit fließt, einem elektrischen Heizwiderstand (5) für den Körper (2) und einem Wärmeregler (11) für diesen Widerstand, dadurch gekennzeichnet, daß der Wärmeregler (11) elektrisch mit einem kalten Bereich (7b) des Widerstands (5) über Verbindungsmittel (14, 17) verbunden ist, die gleichfalls den Abstand zwischen dem Wärmeregler (11) des Widerstands (5) und dem rohrförmigen Körper (2) gewährleisten und somit einen Raumwärmeregler bilden.

2. Heizvorrichtung gemäß dem Patentanspruchs 1 dadurch gekennzeichnet, daß die Verbindungsmittel aus Klemmen (14) des Raumwärmereglers (11) bestehen und vorzugsweise an den kalten Bereich (7b) angelötet sind.

3. Heizvorrichtung gemäß dem Patentanspruch 1 dadurch gekennzeichnet, daß die Verbindungsmittel aus einem Zwischenstück (17) bestehen, insbesondere einem leitenden Draht von ausreichender Steifigkeit, um die Halterung des Raumwärmereglers (11) zu gewährleisten.

4. Heizvorrichtung gemäß einem der vorstehenden Patenansprüche dadurch gekennzeichnet, daß der Raumwärmeregler (11) ein Thermostat ist.

5. Heizvorrichtung gemäß einem der vorstehenden Patentansprüche dadurch gekennzeichnet, daß:
- der rohrförmige Körper (2) und der elektrische Widerstand (5) miteinander verbunden sind und ein U bilden, wobei der rohrförmige Körper (2) den Widerstand (5) umgibt und an dem einen Ende einen Eintritt (3) und am anderen einen Austritt (4) hinter den Endstücken des Widerstands bildet die somit die kalten Bereiche (7a, 7b) des Widerstands (5) darstellen,
- der Wärmeregler (11) mit einem der Endstücke (7b) am Ende des Widerstands (5) verbunden ist.

6. Heizvorrichtung gemäß den Patentansprüchen 2 und 5 dadurch gekennzeichnet, daß der Wärmeregler (11) direkt an einer der Klemme (14) an einer der kalten Endstücke (7b) angeschlossen ist und sich im Vergleich zum Austritt (4) des rohrförmigen Körpers (2) parallel erstreckt.

7. Heizvorrichtung gemäß den Patentansprüchen 3 und 5 dadurch gekennzeichnet, daß der Wärmeregler (11) mit einem der kalten Endstücke (7b) über ein Zwischenstück (17) verbunden ist und sich in den Mittelbereich des U erstreckt.

8. Heißgetränkeautomat bestehend, in einem Fach (22), dessen oberer Teil eine Heiz- und Abstellplatte für eine Kaffeekanne darstellt, aus einer Heizvorrichtung gemäß einem der Patentansprüche 1 bis 7.

9. Heißgetränkeautomat gemäß dem Patentanspruch 8 dadurch gekennzeichnet, daß es aus einer Kaffeeautomaten besteht.

10. Heißgetränkeautomat gemäß dem Patentanspruch 8 oder 9 dadurch gekennzeichnet, daß es eine Halterung (20) für die Kaffeekanne (21), bestehend aus einer Kunststoffplatte (26) zum Abstellen der Kaffeekanne, besitzt.
